# EUROPÄISCHE PATENTSCHRIFT

(11) **EP 0 596 291 B1**
(45) Veröffentlichungstag und Bekanntmachung des Hinweises auf die Patenterteilung: **12.02.1997**
(21) Anmeldenummer: 93116605.2
(22) Anmeldetag: 14.10.1993
(51) Int. Cl.: C08F 246/00, C08F 220/36, C09D 157/04, C09J 157/04

(54) **Bei Raumtemperatur vernetzende Copolymerisate**
Copolymers curing at room temperature
Copolymères réticulant à température ambiante

(30) Priorität: 03.11.1992 DE 4237030
(43) Veröffentlichungstag der Anmeldung: 11.05.1994
(73) Patentinhaber: BASF Aktiengesellschaft, 67063 Ludwigshafen (DE)
(72) Erfinder: Haeberle, Karl, Dr., D-66346 Speyer (DE); Bauer, Gerhard, Dr., D-6940 Weinheim (DE); Maempel, Lothar, Dr., D-6835 Bruehl (DE)

(56) Entgegenhaltungen:
- FR-A- 1 551 838
- FR-A- 2 197 025

## Beschreibung

Die Erfindung betrifft Copolymerisate, aufgebaut aus
- a) 0,01 bis 40 Gew.-%: einer copolymerisierten ethylenisch ungesättigten Verbindung mit mindestens einer mit einem Oxim blockierten Isocyanatgruppe,
- b) mindestens 30 Gew.-%: mindestens eines C₁ bis C₂₀-Alkyl (meth-)acrylats, eines Vinylesters von 1 bis 20 C-Atome enthaltenden Carbonsäuren, eines Vinylaromaten mit bis zu 20 C-Atomen, eines ethylenisch ungesättigten Nitrils mit 3 bis 6 C-Atomen, eines Vinylhalogenids oder eines nichtaromatischen Kohlenwasserstoffs mit 4 bis 8 C-Atomen und mindestens 2 konjugierten Doppelbindungen,
- c) 0,01 bis 30 Gew.-%: mindestens eines Comonomeren mit mindestens einer Keto- oder Aldehydgruppe und
- d) 0 bis 50 Gew.-%: mindestens eines weiteren von a) bis c) verschiedenen Monomeren.
oder Mischungen von Copolymerisaten, aufgebaut aus
- a) 0,01 bis 40 Gew.-%: einer copolymerisierten ethylenisch ungesättigten Verbindung mit mindetens einer mit einem Oxim blockierten Isocyanatgruppe,
- b) 30 bis 99,99 Gew.-%: mindestens eines C₁ bis C₂₀-Alkyl (meth-)acrylats, eines Vinylesters von 1 bis 20 C-Atome enthaltenden Carbonsäuren, eines Vinylaromaten mit bis zu 20 C-Atomen, eines ethylenisch ungesättigten Nitrils mit 3 bis 6 C-Atomen, eines Vinylhalogenids oder eines nichtaromatischen Kohlenwasserstoffs mit 4 bis 8 C-Atomen und mindestens 2 konjugierten Doppelbindungen,
- c) 0 bis 30 Gew.-%: mindestens eines Comonomeren mit mindestens einer Keto- oder Aldehydgruppe und
- d) 0 bs 50 Gew.-%: mindestens eine weiteren von a) bis c) verschiedenen Monomeren.
und Verbindungen, welche mindestens zwei Keto- oder Aldehydgruppen oder mindestens eine Keto- und eine Aldehydgruppe enthalten.

Weiterhin betrifft die Erfindung die Verwendung dieser Copolymerisate als Beschichtungsmittel oder Klebstoff und mit diesen Copolymerisaten beschichtete Substrate.

Bei Copolymerisaten, welche in Beschichtungsmitteln oder Klebstoffen Verwendung finden, handelt es sich vielfach um vernetzungsfähige Copolymerisate. Durch eine Vernetzung können z.B. Schutzüberzüge oder Klebstoffbeschichtungen mit guten elastischen Eigenschaften, hoher Kohäsion, hoher Chemikalien- und Lösemittelbeständigkeit erhalten werden.

Zur Vernetzung wird den Copolymerisaten im allgemeinen ein Vernetzungsmittel zugesetzt, das mit funktionellen Gruppen im Copolymerisat reagiert. Mögliche Vernetzungsmittel sind z.B. Polyisocyanate, welche mit Hydroxylgruppen oder Aminogruppen reagieren.

Aus der DE-A-35 21 618 sind entsprechende wäßrige Klebstoffzubereitungen bekannt, bei denen in Wasser dispergierte Polyisocyanate wäßrigen Dispersionen radikalisch polymerisierter Copolymerisate als Vernetzungsmittel zugesetzt werden. Ähnliche Klebstoffzubereitungen sind auch in der US-A-43 96 738 und DE-A-31 12 117 beschrieben.

Nachteilig bei diesen wäßrigen Zubereitungen ist jedoch die mangelnde Lagerstabilität. Das Polyisocyanat darf daher erst kurz vor seiner Verwendung als Vernetzungshilfsmittel in Wasser dispergiert und mit dem Copolymerisat gemischt werden.

Eine erhöhte Lagerstabilität kann durch Umsetzung der Isocyanatgruppen mit Blockierungsmitteln, z.B. Oximen, Caprolactam, Phenolen, Maleinsäuredialkylestern erreicht werden. Die erhaltenen sog. blockierten Polyisocyante hydrolysieren in wäßriger Dispersion nur noch in untergeordnetem Ausmaß.

Gegenstand der DE-A-38 07 555 ist ein solches, mit Oximen blockiertes Diisocyanat, welches in Wasser dispergiert wird und sich als Zusatz für in Wasser dispergierte Polymerisate eignet.

Aus der DE-A-24 54 253 ist auch bekannt, ethylenisch ungesättigte, mit Oximen blockierte Isocyanate als Comonomere einzusetzen und die erhaltenen Copolymerisate durch Zusatz von Verbindungen mit reaktiven Gruppen, z.B. Hydroxylgruppen, zu vernetzen. Ebenfalls bekannt ist aus der EP-A-445 739, sogenannte selbstvernetzende Copolymerisate als Beschichtungsmittel einzusetzen. Diese Copolymerisate enthalten sowohl mit Oximen blockierte Isocyanatgruppen als auch mit Isocyanaten reaktive Gruppen.

Vernetzungsreaktionen treten jedoch bei diesen Vernetzungssystemen erst nach Abspaltung des Blockierungsmittels bei hohen Temperaturen auf.

Bisher bekannte wäßrige Klebstoffzubereitungen mit Polyisocyanaten als Vernetzungsmittel sind daher entweder nicht lagerstabil und können daher nur als 2-Komponentensystem Verwendung finden oder vernetzen erst bei hohen Temperaturen.

Lagerstabile, bei Raumtemperatur nach Entfernen des Lösungsmittels vernetzende wäßrige Dispersionen sind aus der EP-A-3516 bekannt. Diese Dispersionen enthalten Polyhydrazide, welche mit im Copolymerisat einpolymerisieren Monomeren mit Carbonylgruppen reagieren.

Lagerstabile, bei Raumtemperatur vernetzende Systeme sind auch in der unveröffentlichten deutschen Patentanmeldung P 41 21 946 beschrieben. Bei diesen Vernetzungssystemen werden mit Oximen blockierte, gesättigte Isocyanate zu Keto- oder Aldehydgruppenenthaltenden Copolymerisaten als Vernetzer hinzugesetzt. Im Falle unvollständiger Vernetzung besteht hier der Nachteil, daß ungebundene Vernetzer später z.B. aus einer hergestellten Beschichtung migrieren kann.

Aus FR-A-1551838 und FR-A-2197025 sind Copolymerisate zu entnehmen, welche Monomere mit durch Oximen blockierte Isocyanatgruppen enthalten.

Es ist grundsätzlich erwünscht, weitere lagerstabile, bei Raumtemperatur vernetzende Dispersionen zu entwickeln, um Alternativen zur Polyhydrazidvernetzung zur Verfügung zu stellen.

Aufgabe der vorliegenden Erfindung waren daher vernetzbare, insbesondere auch selbst vernetzbare Copolymerisate, welche in Dispersion oder Lösung auch in Gegenwart eines Vernetzungsmittels lagerstabil sind und bei Raumtemperatur vernetzt werden können.

Demgemäß wurden die oben definierten Copolymerisate und Mischungen und ihre Verwendung als Beschichtungsmittel oder Klebstoff gefunden.

Bei der Vernetzung der Copolymerisate reagieren die mit Oximen blockierten Isocyanatgruppen der einpolymerisierten Monomere a) mit Keto- oder Aldehydgruppen wahrscheinlich nach folgendem Schema:

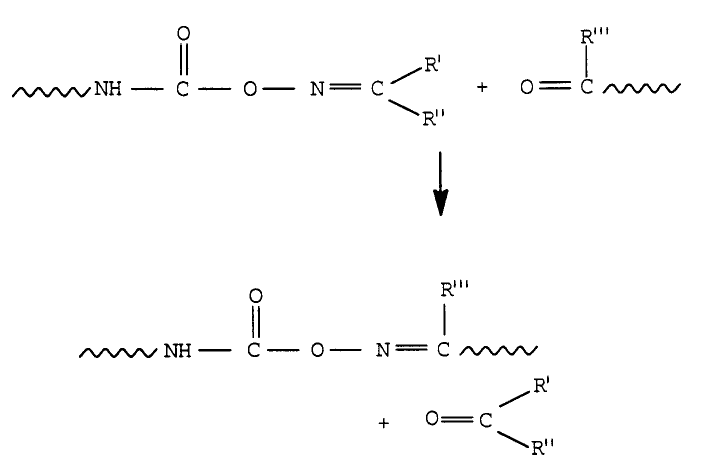

Die Vernetzung wird nach diesem Schema durch eine Umoximierung bewirkt.

Der Gehalt an copolymerisierbaren ethylenisch ungesättigten Verbindungen mit mindestens einer mit einem Oxim blockierten Isocyanatgruppe (Monomere a)) im Copolymerisat sollte mindestens 0,01 Gew.-% betragen, um eine ausreichende Vernetzungsfähigkeit zu gewährleisten. Ein Gehalt über 40 Gew.-% ist im allgemeinen nicht notwendig.

Vorzugsweise beträgt der Gehalt an Monomeren a) 0,1 bis 10, besonders bevorzugt 0,1 bis 5 Gew.-%.

Monomere a) enthalten vorzugsweise nur eine copolymerisierbare ethylenisch ungesättigte Bindung. Weiterhin enthalten sie vorzugsweise ein bis drei, besonders bevorzugt eine mit Oximen blockierte Isocyanatgruppe.

Als Monomere a) in Betracht kommen z.B. folgende Verbindungen, deren Isocyanatgruppen durch Oxime blockiert sind:

(Meth)acryloylisocyanat, C₁-C₁₀-Alkyl(meth)-acrylate, die im Alkylrest durch mindestens eine, vorzugsweise eine Isocyanatgruppe, substituiert sind, z.B. 2-Isocyanatoethyl(meth)acrylat, m- oder p-Isopropenyl-α,α'dimethylbenzylisocyanat.

Monomere a) können auch in einfacher Weise hergestellt werden, indem man zunächst Polyisocyanate, insbesondere Diisocyanate, mit ethylenisch ungesättigten Verbindungen umsetzt, so daß mindestens eine freie Isocyanatgruppe verbleibt.

Als ethylenisch ungesättigte Verbindungen eignen sich solche, die mindestens eine gegenüber Isocyanat reaktive Gruppe, z.B. eine primäre oder sekundäre Aminogruppe oder vorzugsweise eine Hydroxylgruppe, aufweisen. Diese können in bekannter Weise mit einem Polyisocyanat unter Harnstoff- bzw. Urethanbildung umgesetzt werden. Vorzugsweise werden ethylenisch ungesättigte Verbindungen mit einer Hydroxygruppe, z.B. Hydroxy-C₁-C₁₀-alkyl(meth)acrylate, mit Polyisocyanaten, insbesondere Diisocyanaten, umgesetzt.

Geeignete Diisocyanate sind z.B. solche mit der allgemeinen Formel X(NCO)₂, wobei X für einen aliphatischen Kohlenwasserstoffrest mit 4 bis 12 C-Atomen, einen cycloaliphatischen mit 6 bis 15 Atomen oder einen aromatischen oder alkaromatischen Kohlenwasserstoffrest mit 6 bis 15 C-Atomen steht.

Genannt seien z.B. 1,4-Butandiisocyanat, 1,6-Hexandiisocyanat, 2,2,4- und 2,4,4-Trimethylhexamethylendiisocyanat, Cyclohexandiisocyanat, Methylcyclohexandiisocyanat, Isophorondiisocyanat, 4,4'-Diisocyanatodiphenylmethan, 4,4'-Diisocyanatodicyclohexylmethan, 2,4- und 2,6-Toluoldiisocyanat.

Die nach der Umsetzung des Polyisocyanats mit der ethylenisch ungesättigten Verbindung verbleibenden freien Isocyanatgruppen werden mit Oximen umgesetzt, so daß zumindest eine Isocyanatgruppe der Monomeren a) mit einem Oxim blockiert ist.

Als Oxime für die Blockierung der Isocyanatgruppen der Monomeren a) sind Oxime von aliphatischen, cycloaliphatischen oder aromatischen Aldehyden oder Ketonen, z.B. Acetonoxim, Methylethylketonoxim, Dieethylketoxim, Methylisopropylketoxim, Methylisobutylketoxim, Diisopropylketoxim, Cyclohexanonoxim, 2-Methylcyclohexanonoxim, 2,6-Dimethylcyclohexanonoxim, Acetophenonoxim, Benzophenonoxim oder Diethylglyoxim, geeignet. Bevorzugt sind Oxime von aliphatischen Ketonen mit einer Ketogruppe und insgesamt 3 bis 12 Kohlenstoffatomen, insbesondere Acetonoxim und Methylethylketonoxim.

Die Umsetzung der Oxime mit den Isocyanatgruppen enthaltenden Verbindungen (Blockierung der Isocyanatgruppen) kann in dem Fachmann bekannter Weise in inerten organischen Lösungsmitteln, z.B. aromatischen Kohlenwasserstoffen wie Toluol, oder auch lösemittelfrei bei Temperaturen zwischen 20 und 150°C, bevorzugt 20 und 100°C, erfolgen.

Die Blockierungsreaktion kann zweckmäßigerweise in Gegenwart von Metallsalzen als Katalysatoren, z.B. Dibutylzinndilaurat oder Zinnoctoat, durchgeführt werden.

Die Copolymerisate enthalten weiterhin als sog. Hauptmonomere b) 30 - 99,99, vorzugsweise 70 bis 99,9, besonders bevorzugt 85 bis 99,9 Gew.-% eines Monomeren ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigte Nitrile mit 3 bis 6 C-Atomen, Vinylhalogenide und nichtaromatischen Kohlenwasserstoffen mit mindestens 2 konjugierten Doppelbindungen und 4 bis 8 C-Atomen.

Als Hauptmonomere zu nennen sind z.B. (Meth)-acrylsäurealkylester mit einem C₁-C₁₀-Alkylrest, wie Methylmethacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind z.B. Vinyllaurat, -stearat, Vinylpropionat und Vinylacetat.

Als vinylaromatische Verbindungen kommen Vinyltoluol, α- und p-Styrol, α-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als nicht aromatische Kohlenwasserstoffe mit 2 bis 8 C-Atomen und mindestens zwei olefinischen Doppelbindungen seinen Butadien, Isopren, und Chloropren genannt.

Die Hauptmonomeren werden auch vorzugsweise im Gemisch eingesetzt.

Die Copolymerisate können weiterhin auch Monomere mit mindestens einer Aldehyd- oder Ketogruppe (Monomere c)) enthalten.

Vorzugsweise handelt es sich um Monomere mit ein oder zwei Aldehyd-, bzw. Ketogruppen oder einer Aldehyd- und einer Ketogruppe und einer radikalisch polymerisierbaren olefinischen Doppelbindung.

In Betracht kommen z.B. Acrolein, Methacrolein, Vinylalkylketone mit 1 bis 20, vorzugsweise 1 bis 10 Kohlenstoffatomen im Alkylrest, Formylstyrol, (Meth-)acrylsäurealkylester mit ein oder zwei Keto- oder Aldehyd-, bzw. einer Aldehyd- und einer Ketogruppe im Alkylrest, wobei der Alkylrest vorzugsweise insgesamt 3 bis 10 Kohlenstoffatome umfaßt, z.B. (Meth)-acryloxyalkylpropanale, wie sie in der DE-A-27 22 097 beschrieben sind. Des weiteren eignen sich auch N-Oxoalkyl(meth)acrylamide wie sie z.B. aus der US-A-4 226 007, der DE-A-20 61 213 oder DE-A-22 07 209 bekannt sind.

Besonders bevorzugt sind Acetoacetyl(meth)acrylat, Acetoacetoxyethyl(meth)acrylat und insbesondere Diacetonacrylamid.

Der Gehalt dieser Monomeren beträgt im allgemeinen zwischen 0 und 30 Gew.-%, insbesondere zwischen 0 und 10, besonders bevorzugt zwischen 0 und 5 Gew.-%.

Das Copolymerisat kann selbst- oder fremdvernetzbar sein. Im Falle der Selbstvernetzbarkeit enthält es sowohl copolymerisierbare Oximether als auch Monomere mit mindestens einer Keto- oder Aldehydgruppe. Die Vernetzung tritt dann ohne Zusatz eines Vernetzungsmittels durch Reaktion der Oximgruppe mit den Keto- oder Aldehydgruppe im gleichen Copolymerisat ein.

Der Gehalt am Monomer mit mindestens einer Keto- oder Aldehydgruppe c) im Copolymerisat sollte dann mindestens 0,01 Gew.-%, vorzugsweise mindestens 0,1 Gew.-%, betragen. Die maximal mögliche Menge des Hauptmonomeren reduziert sich dann um 0,01 Gew.-% bzw. 0,1 Gew.-%.

Als weitere von den Monomeren a) bis c) verschiedene Monomere d), welche im Copolymerisat enthalten sein können, sind z.B. Ester der Acryl- und Methacrylsäure von Alkoholen mit 1 bis 20 C-Atomen, die außer dem Sauerstoffatom in der Alkoholgruppe mindestens ein weiteres Heteroatom enthalten und/oder die einen aliphatischen oder aromatischen Ring enthalten, wie 2-Ethoxyethylacrylat, 2-Butoxyethyl(meth)acrylat, Dimethylaminoethyl(meth)acrylat, Diethylaminoethyl(meth)acrylat, (Meth)acrylsäurearyl-, -alkaryl- oder Cycloalkylester, wie Cyclohexyl(meth)acrylat, Phenylethyl (meth)-acrylat, Phenylpropyl(meth)acrylat- oder Acrylsäureester von heterocyclischen Alkoholen wie Furfuryl(meth)acrylat genannt.

Darüber hinaus kommen noch weitere Monomere wie (Meth)acrylamid, sowie deren am Stickstoff mit C₁-C₄-Alkyl substituierten Derivate, in Betracht.

Von Bedeutung sind auch hydroxyfunktionelle Monomere, z.B. (Meth)acrylsäure-C₁-C₁₅-alkylester, welche durch ein oder zwei Hydroxygruppen substituiert sind. Insbesondere von Bedeutung als hydroxyfunktionelle Comonomere sind (Meth)acrylsäure-C₁-C₈-Hydroxyalkylester, wie n-Hydroxyethyl-, n-Hydroxypropyl- oder n-Hydroxybutyl (meth)acrylat.

Die Mitverwendung von Comonomeren mit salzbildenden Gruppen empfiehlt sich für die Herstellung selbstdispergierbarer Copolymerisate, die z.B. für wäßrige Sekundärdispersionen geeignet sind. Monomere mit salzbildenden Gruppen sind insbesondere Itaconsäure, Acrylsäure und Methacrylsäure.

Der Gewichtsanteil der weiteren Comonomeren im Copolymerisat kann 0 bis 50 %, vorzugsweise 0 bis 20 % und ganz besonders bevorzugt 0 bis 10 Gew.-% betragen.

Die Herstellung des Copolymerisats A) erfolgt durch radikalische Polymerisation. Geeignete Polymerisationsmethoden, wie Substanz-, Lösungs-, Suspensions- oder Emulsionspolymerisation sind dem Fachmann bekannt.

Vorzugsweise wird das Copolymerisat durch Lösungspolymerisation mit anschließender Dispergierung in Wasser oder besonders bevorzugt durch Emulsionspolymerisation hergestellt.

Die Comonomeren können bei der Emulsionspolymerisation wie üblich in Gegenwart eines wasserlöslichen Initiators und eines Emulgators bei vorzugsweise 30 bis 95°C polymerisiert werden.

Geeignete Initiatoren sind z.B. Natrium-, Kalium- und Ammoniumpersulfat, tert.-Butylhydroperoxide, wasserlösliche Azoverbindungen oder auch Redoxinitiatoren.

Als Emulgatoren dienen z.B. Alkalisalze von längerkettigen Fettsäuren, Alkylsulfate, Alkylsulfonate, alkylierte Arylsulfonate oder alkylierte Biphenylethersulfonate. Des weiteren kommen als Emulgatoren Umsetzungsprodukte von Alkylenoxiden, insbesondere Ethylen- oder Propylenoxid mit Fettalkoholen, -säuren oder Phenol, bzw. Alkylphenolen in Betracht.

Im Falle von wäßrigen Sekundärdispersionen wird das Copolymerisat zunächst durch Lösungspolymerisation in einem organischen Lösungsmittel hergestellt und anschließend unter Zugabe von Salzbildnern, z.B. von Ammoniak zu Carbonsäuregruppen enthaltenden Copolymerisaten, in Wasser ohne Verwendung eines Emulgators oder Dispergierhilfsmittels dispergiert. Das organische Lösungsmittel kann abdestilliert werden. Die Herstellung von wäßrigen Sekundärdispersionen ist dem Fachmann bekannt und z.B. in der DE-A-37 20 860 beschrieben.

Zur Einstellung des Molekulargewichts können bei der Polymerisation Regler eingesetzt werden. Geeignet sind z.B. -SH enthaltende Verbindungen wie Mercaptoethanol, Mercaptopropanol, Thiophenol, Thioglycerin, Thioglykolsäureethylester, Thioglykolsäuremethylester und tert.-Dodecylmercaptan.

Die Art und Menge der Comonomeren wird zweckdienlicherweise so gewählt, daß das erhaltene Copolymerisat eine Glasübergangstemperatur zwischen bevorzugt -60 und +140°C, besonders bevorzugt -30 und +80°C und ganz besonders bevorzugt, vor allem im Falle der Verwendung als Klebstoff, zwischen -30 und +20°C hat. Die Glasübergangstemperatur des Copolymerisats läßt sich nach üblichen Methoden wie Differentialthermoanalyse oder Differential Scanning Calorimetrie (s. z.B. ASTM 3418/82, sog. "midpoint temperature") bestimmen.

Dem Copolymerisat kann eine Verbindung, welche mindestens zwei Keto- oder Aldehydgruppen, bzw. mindestens eine Keto- und eine Aldehydgruppe enthält, als Vernetzungsmittel zugegeben werden, bzw. das Copolymerisat kann zur Vernetzung von solchen Verbindungen eingesetzt werden.

Geeignet sind z.B. als Vernetzungsmittel insbesondere auch radikalische Copolymerisate - im folgenden auch polymeres Vernetzungsmittel genannt - welche voranstehend genannte Monomere c) einpolymerisiert enthalten.

In Betracht kommen z.B. polymere Vernetzungsmittel, die aus 30 - 99,9 Gew.-%, vorzugsweise 70 - 99,9 Gew.-% der Monomeren b), 0,01 - 30 Gew.-%, vorzugsweise 0,1 - 10 Gew.-%, der Monomeren c) und 0 - 50 Gew.-%, vorzugsweise 0 - 20 Gew.-%, der Monomeren d) aufgebaut sind. Über die Art der Monomeren, die Glasübergangstemperatur und die Herstellung gilt vorzugsweise das voranstehend über obige Copolymerisate gesagte.

Das Vernetzungsmittel, soweit gewünscht, wird vorzugsweise zur Lösung oder Dispersion der erfindungsgemäßen Copolymerisate gegeben.

Es ist jedoch auch möglich, das Copolymerisat und das Vernetzungsmittel erst bei der Anwendung, z.B. der Beschichtung von Oberflächen zusammenzubringen. Dazu könnte auf die Oberfläche z.B. zunächst das Vernetzungsmittel als sog. Primer aufgebracht werden und anschließend die Beschichtung mit der Dispersion oder Lösung der Copolymerisate erfolgt.

Die Lösung oder Dispersion der erfindungsgemäßen Copolymerisate eignet sich z.B. für die Verwendung als Anstrich- und Beschichtungsmittel für unterschiedliche Substrate mit Kunststoff-, Holz- oder Metalloberflächen oder z.B. für Textilien, Vliesstoffe, Leder oder Papier. Sie eignen sich ebenfalls für Anwendungen in der Bauchemie z.B. als Klebstoffe, Dichtungsmassen, Bindemittel.

Die Dispersionen oder Lösungen können je nach Verwendungszweck noch übliche Hilfs- und Zusatzmittel enthalten. Hierzu gehören beispielsweise Füllstoffe wie Quarzmehl, Quarzsand, hochdisperse Kieselsäure, Schwerspat, Calciumcarbonat, Kreide, Dolomit oder Talkum, die oft zusammen mit geeigneten Netzmitteln wie z.B.

Polyphosphaten wie Natriumhexametaphosphat, Naphthalinsulfonsaure Ammonium- oder Natriumpolyacrylsäuresalze eingesetzt werden, wobei die Netzmittel im allgemeinen von 0,2 bis 0,6 Gew.-%, bezogen auf den Füllstoff, zugesetzt werden.

Auch Fungizide zur Konservierung können zugesetzt werden. Diese kommen im allgemeinen in Mengen von 0,02 bis 1 Gew.-%, bezogen auf die Dispersionen oder Lösungen zum Einsatz. Geeignete Fungizide sind beispielsweise Phenol- oder Kresol-Derivate oder zinnorganische Verbindungen.

Besonders eignen sich die Dispersionen oder Lösungen auch als Dichtstoff- oder Klebstoffzübereitungen, insbesondere als Kaschierklebstoff zur Herstellung von Verbundfolien und Glanzfolien. Als solche können sie neben obengenannten Zusatzstoffen noch spezielle, in der Klebstofftechnologie übliche Hilfs- und Zusatzmittel enthalten. Hierzu gehören beispielsweise Verdickungsmittel, Weichmacher oder auch klebrigmachende Harze wie z.B. Naturharze oder modifizierte Harze wie Kolophoniumester oder synthetische Harze wie Phthalatharze.

Die Dispersionen oder Lösungen der selbstvernetzenden oder fremdvernetzenden Copolymerisate, welche noch ein Vernetzungsmittel enthalten, sind lagerstabil. Die Vernetzung tritt bereits bei Raumtemperatur mit Verflüchtigung des Lösungsmittels ein.

Die mit diesen Dispersionen oder Lösungen hergestellten Beschichtungen oder Verklebungen weisen eine gute Chemikalien- oder Lösungsmittelbeständigkeit und eine gute innere Festigkeit (Kohäsion) auf.

### Beispiele

### I. Herstellung von copolymerisierbaren Verbindungen (Monomeren) mit einer mit einem Oxim blockierten Isocyanatgruppe.

### Monomer 1 (M1)

Zu 116 g (1,0 mol) 2-Hydroxyethylacrylat wurden innerhalb von 30 min 222 g (1,0 mol) Isophorondiisocyanat gegeben, wobei durch Kühlung die Temperatur unterhalb von 80°C gehalten wurde. Nach 2 h bei 80°C war ein NCO-Gehalt von 12,1 % erreicht (theor. 12,4 %). Zu diesem Addukt wurden 87 g (1,0 mol) Butanonoxim gegeben und 2 h bei 60°C gerührt.

### Monomer 2 (M2)

Zu 201 g (1,0 mol) meta-Isopropenyl-α,α'-dimethylbenzylisocyanat wurden bei Raumtemperatur innerhalb von 30 min 87 g (1;0 mol) Butanonoxim gegeben. Die Temperatur stieg hierbei auf 46°C. Nach 2 h war die Reaktion beendet.

### II. Herstellung von Copolymerisatdispersionen

### Copolymerisatdispersion D1

In einem Reaktionsgefäß mit Rührer und zwei Zulaufgefäßen (Zulauf 1 und Zulauf 2) wurden 200 g entsalztes Wasser, 37 g des Zulaufes 1 und 20 g des Zulaufes 2 vorgelegt und auf 85°C erwärmt. Nach 15 min wurde innerhalb von 2 h gleichmäßig der Zulauf 1 sowie innerhalb von 2,5 h gleichmäßig der Zulauf 2 zum Reaktionsgefäß zugegeben. Nach der letzten Initiatorzugabe (Zulauf 2) wurde die Dispersion noch 1 h bei 85°C gerührt.
Zulauf 1: (dieser Zulauf wurde während der Polymerisation gerührt)
   - 107 g: entsalztes Wasser
   - 400 g: Ethylacrylat
   - 90 g: Methylmethacrylat
   - 50 g: 20 gew.-%ige wäßrige Diacetonacrylamidlösung
   - 50 g: 20 gew.-%ige Lösung des Na-Salzes vom p-Dodecyldiphenyl etherdisulfonat in Wasser (Emulgator)
   - 50 g: 20 gew.-%ige Lösung des Umsetzungsproduktes von p-Isononylphenol mit ca. 50 mol Ethylenoxid in Wasser (Emulgator)
Zulauf 2:
   - 100 g: entsalztes Wasser
   - 3 g: Na-Persulfat

Weitere Copolymerisatdispersionen D2 bis D5 wurden entsprechend obiger Vorschrift hergestellt. Die Monomerenzusammensetzung ist in Tabelle 1 angegeben. Die Dispersion D2 bis D5 sind erfindungsgemäß und enthalten entweder Monomer 1 oder Monomer 2, deren Herstellung oben beschrieben ist.

**Tabelle 1**

| Zusammensetzung der Copolymerisate in Gew.-% | | | | | |
|---|---|---|---|---|---|
| Copolymerisatdispersion | EA | MMA | DAAM | M1 | M2 |
| D1 | 80 | 18 | 2 | - | - |
| D2 | 74,4 | 18 | 2 | 5,6 | - |
| D3 | 76,2 | 18 | 2 | - | 3,8 |
| D4 | 76,4 | 18 | - | 5,6 | - |
| D5 | 78,2 | 18 | - | - | 3,8 |
| Abkürzungen: EA: Ethylacrylat MMA: Methylmethacrylat DAAM: Diacetonacrylamid | | | | | |

Prüfung der Dispersionen auf Vernetzbarkeit und anwendungstechnische Eigenschaften

### Vernetzbarkeit (Prüfung durch Quellungsverhalten)

Es wurden die Dispersionen D1 (zum Vergleich), D2 und D3 (selbstvernetzend) und Mischungen der Dispersionen D4 und D5 mit D1 (fremdvernetzend) im Gewichtsverhältnis 1:1 geprüft.

Aus je 200 g der erhaltenen Mischungen D1/D4 und D1/D5 bzw. 200 g Dispersionen D1 - D3 wurden Filme gegossen und die Filme 1 Woche bei Raumtemperatur getrocknet. Anschließend wurde das Quellungsverhalten als Maß für den Vernetzungsgrad dieser Filme in Tetrahydrofuran untersucht, indem ca. 1 g der verfilmten Proben in Tetrahydrofuran 24 Stunden gelagert und die Lösungsmittelaufnahme in Gew.-% gemessen wurde (Ergebnisse in Tabelle 2).

Bei vernetzten Polymeren kommt es durch Aufnahme von Lösungsmittel zur Quellung. Mit steigendem Vernetzungsgrad wird die Quellung geringer, da weniger Lösungsmittel vom eng vernetzten Polymer aufgenommen werden kann. Nicht vernetzte Polymere werden durch Lösungsmittel gelöst.

### III. Herstellung von Verbundfolien

Die obigen Dispersionen und Mischungen wurden mit einer Trockenschichtdicke von 3 g/m² auf eine auf 50°C erwärmte Polyethylentherephthalatfolie (PETP) gerakelt und nach 20 sek. mit einer Polyethylenfolie PE (coronavorbehandelt) kaschiert. Anschließend wurden die Folien 7 Tage bei Raumtemperatur und Normalklima gelagert und danach in 2 cm breite Streifen zerschnitten. Diese Streifen wurden dann bei 23°C im Winkel von 180° mit einer Geschwindigkeit von 100 m/min abgezogen. Es wurde die Schälkraft in N bei den 2 cm breiten Streifen bestimmt (Tabelle 2).

### IV. Herstellung von Glanzfolien

Die obigen Dispersionen und deren Mischungen wurden mit einer Trockenschichtdicke von 5 g/m² auf mit Offsetfarben bedruckten Kartonagen gerakelt, bei 60°C getrocknet und nach ca. 30 sek. mit biaxial verstreckten Polypropylenfolien (o-PP) kaschiert.

Es wurde geprüft, ob es beim Abreißen der Folie (Schälprüfung) zu einem Papier- und Farbausriß von der Kartonage kommt (Note 1: vollständiger Papier- oder Farbausriß(gute Haftung der Folie), Note 2: teilweiser Papier- oder Farbausriß) und ob sich im Bereich von Nuten (Prägungen in der Kartonage) die Folie ablöst bzw. nicht fest anliegt (Nutstandfestigkeit; + = keine Ablösung an der Nut, - = Ablösung an der Nut und +/- = teilweise Ablösung an der Nut) (Ergebnisse in Tabelle 2).

**Tabelle 2**

| Dispersion | Lösungsmittelaufnahme Gew.-% | Glanzfolien | | Verbundfolien Schälfestigkeit N/cm |
|---|---|---|---|---|
| | | Schälprüfung | Nutstandfestigkeit | |
| D1 | aufgelöst | 2 | - | 0,5 |
| D2 | 800 | 1 | + | 2,8 |
| D3 | 920 | 1 | + | 2,3 |
| D1/D4 *) | 950 | 1 | + | 2,7 |
| D1/D5 *) | 1030 | 1 | + | 2,1 |

| | | | | |
|---|---|---|---|---|
| *) Gewichtsverhältnis der Dispersionen 1:1 (bezogen auf Feststoff) | | | | |

## Patentansprüche

1. Copolymerisate, aufgebaut aus
a) 0,01 bis 40 Gew.-% einer copolymerisierten ethylenisch ungesättigten Verbindung mit mindestens einer mit einem Oxim blockierten Isocyanatgruppe,
b) mindestens 30 Gew.-% mindestens eines C₁ bis C₂₀-Alkyl (meth-)acrylats, eines Vinylesters von 1 bis 20 C-Atome enthaltenden Carbonsäuren, eines Vinylaromaten mit bis zu 20 C-Atomen, eines ethylenisch ungesättigten Nitrils mit 3 bis 6 C-Atomen, eines Vinylhalogenids oder eines nichtaromatischen Kohlenwasserstoffs mit 4 bis 8 C-Atomen und mindestens 2 konjugierten Doppelbindungen,
c) 0,01 bis 30 Gew.-% mindestens eines Comonomeren mit mindestens einer Keto- oder Aldehydgruppe und
d) 0 bis 50 Gew.-% mindestens eines weiteren von a) bis c) verschiedenen Monomeren.

2. Mischungen von Copolymerisaten, aufgebaut aus
a) 0,01 bis 40 Gew.-% einer copolymerisierten ethylenisch ungesättigten Verbindung mit mindetens einer mit einem Oxim blockierten Isocyanatgruppe,
b) 30 bis 99,99 Gew.-% mindestens eines C₁ bis C₂₀-Alkyl (meth-)acrylats, eines Vinylesters von 1 bis 20 C-Atome enthaltenden Carbonsäuren, eines Vinylaromaten mit bis zu 20 C-Atomen, eines ethylenisch ungesättigten Nitrils mit 3 bis 6 C-Atomen, eines Vinylhalogenids oder eines nichtaromatischen Kohlenwasserstoffs mit 4 bis 8 C-Atomen und mindestens 2 konjugierten Doppelbindungen,
c) 0 bis 30 Gew.-% mindestens eines Comonomeren mit mindestens einer Keto- oder Aldehydgruppe und
d) 0 bs 50 Gew.-% mindestens eine weiteren von a) bis c) verschiedenen Monomeren.
und Verbindungen, welche mindestens zwei Keto- oder Aldehydgruppen oder mindestens eine Keto- und eine Aldehydgruppe enthalten.

3. Verwendung von Copolymerisaten oder Mischungen gemäß Anspruch 1 oder 2 als Beschichtungsmittel.

4. Verwendung von Copolymerisaten oder Mischungen gemäß Anspruch 1 oder 2 als Klebstoff.

5. Mit Copolymerisaten oder Mischungen gemäß Anspruch 1 oder 2 beschichtete Substrate.

## Claims

1. A copolymer composed of
a) from 0.01 to 40% by weight of a copolymerized ethylenically unsaturated compound having at least one isocyanate group blocked with an oxime,
b) at least 30% by weight of at least one C₁-C₂₀-alkyl (meth)acrylate, one vinyl ester of carboxylic acids of 1 to 20 carbon atoms, one vinylaromatic of up to 20 carbon atoms, one ethylenically unsaturated nitrile of 3 to 6 carbon atoms, one vinyl halide or one nonaromatic hydrocarbon of 4 to 8 carbon atoms having at least 2 conjugated double bonds,
c) from 0.01 to 30% by weight of at least one comonomer having at least one keto or aldehyde group and
d) from 0 to 50% by weight of at least one further monomer different from a) to c)

2. A mixture of a copolymer composed of
a) from 0.01 to 40% by weight of a copolymerized ethylenically unsaturated compound having at least one isocyanate group blocked with an oxime,
b) from 30 to 99.99% by weight of at least one C₁-C₂₀-alkyl (meth)acrylate, one vinyl ester of carboxylic acids of 1 to 20 carbon atoms, one vinylaromatic of up to 20 carbon atoms, one ethylenically unsaturated nitrile of 3 to 6 carbon atoms, one vinyl halide or one nonaromatic hydrocarbon of 4 to 8 carbon atoms having at least 2 conjugated double bonds,
c) from 0 to 30% by weight of at least one comonomer having at least one keto or aldehyde group and
d) from 0 to 50% by weight of at least one further monomer different from a) to c), an a compound containing at least two keto or aldehyde groups or at least one keto and one aldehyde group.

3. Use of a copolymer or mixture as claimed in claim 1 or 2 as a coating material.

4. Use of a copolymer or mixture as claimed in claim 1 or 2 as an adhesive.

5. A substrate coated with a copolymer or mixture as claimed in claim 1 or 2.

## Revendications

1. Copolymères, constitués de
a) 0,01 à 40% en poids
d'un composé à insaturation éthylénique copolymérisé avec au moins un radical isocyanate bloqué par un groupe oxime,
b) au moins 30% en poids
d'au moins un (méth)acrylate d'alkyle en C₁ à C₂₀, d'un ester vinylique d'acides carboxyliques contenant de 1 à 20 atomes de carbone, d'un composé vinylaromatique contenant jusqu'à 20 atomes de carbone, d'un nitrile à insaturation éthylénique avec de 3 à 6 atomes de carbone, d'un halogénure de vinyle ou d'un hydrocarbure non aromatique contenant 4 à 8 atomes de carbone et au moins deux doubles liaisons conjuguées,
c) 0,01 à 30% en poids
d'au moins un comonomère avec au moins un groupe céto ou aldéhyde et
d) 0 à 50% en poids
d'au moins un autre monomères différent de a) à c).

2. Mélanges de copolymères, constitués de
a) 0,01 à 40% en poids
d'un composé à insaturation éthylénique copolymérisé avec au moins un radical isocyanate bloqué par un groupe oxime,
b) 30 à 99,99% en poids
d'au moins un (méth)acrylate d'alkyle en C₁ à C₂₀, d'un ester vinylique d'acides carboxyliques contenant de 1 à 20 atomes de carbone, d'un composé vinylaromatique contenant jusqu'à 20 atomes de carbone, d'un nitrile à insaturation éthylénique avec de 3 à 6 atomes de carbone, d'un halogénure de vinyle ou d'un hydrocarbure non aromatique contenant 4 à 8 atomes de carbone et au moins deux doubles liaisons conjuguées,
c) 0 à 30% en poids
d'au moins un comonomère avec au moins un groupe céto ou aldéhyde et
d) 0 à 50% en poids
d'au moins un autre monomères différent de a) à c),
et de composés qui contiennent au moins deux groupes céto ou aldéhyde, ou au moins un groupe céto et un groupe aldéhyde.

3. Utilisation des copolymères ou mélanges suivant la revendication 1 ou 2, à titre d'agents de revêtement.

4. Utilisation de copolymères ou de mélanges suivant la revendication 1 ou 2, à titre de colle.

5. Supports revêtus de copolymères ou de mélanges suivant la revendication 1 ou 2.
